# EUROPEAN PATENT APPLICATION

(11) **EP 2 251 548 A2**
(43) Date of publication of application: **17.11.2010**
(21) Application number: 10160052.6
(22) Date of filing: 15.04.2010
(51) Int. Cl.: F15B 11/12, B64C 11/38

(54) **Hydraulic stepper motor**

(30) Priority: 13.05.2009 GB 0908149
(71) Applicant: Rolls-Royce plc, London SW1E 6AT (GB)
(72) Inventor: Bellis, Mark, Derby, DE3 9AR (GB)
(74) Representative: Barcock, Ruth Anita

(57) **Abstract**

A hydraulic stepper motor comprising
three hydraulic ports (32) each coupled to a piston (34) that is actuatable between pressurised and depressurised configurations; and
a contoured cam surface (38) having at least one peak and trough and arranged to react against the pistons (34), the cam surface (38) coupled to an output shaft (40);
whereby actuation of one of the pistons (34) moves the cam surface until a trough reacts against one or more pressurised pistons (34).

## Description

The present invention relates to a hydraulic stepper motor. It finds particular, though not exclusive, utility in controlling the pitch of a set of rotor blades for a contra-rotating propeller gas turbine engine.

It is known to provide an electrical stepper motor to control a plurality of valves that move a hydraulic motor or cylinders. Such known electrical stepper motors are four-phase unipolar or two-phase bipolar, both these designs requiring at least four hydraulic lines. A hydraulic motor operated on a similar basis also requires at least four hydraulic lines. Alternatively a three-phase bipolar stepper motor coupled with a static inverter may be used. Stepper motors may be used to control a rotary output so that the hydraulic actuator is located in a frame of reference that rotates by multiple revolutions relative to its controller. Multiple revolutions cause hydraulic lines to wrap around the components so muff couplings, or other hydraulic transfer couplings, are used to transfer hydraulic fluid across the frame of reference interface.

One disadvantage of muff couplings is that they leak in proportion to the pressure drop in each hydraulic line across the coupling. Thus in a four-phase unipolar or two-phase bipolar stepper motor arrangement there are at least four hydraulic lines passing through muff couplings. The overall system specification must therefore take account of the leakage and consequent oversizing of the fluid system.

An alternative arrangement is to provide a single hydraulic cylinder. However, this has reliability consequences since a single failure causes the piston to travel to its full extent in one or other direction, potentially damaging other components. A piston stop mechanism may be added, with a resultant weight penalty, but this may be insufficient protection in a safety critical application.

The present invention seeks to provide a hydraulic stepper motor that seeks to address the aforementioned problems.

Throughout this specification it is intended that the cam surface has a mean displacement from the hydraulic ports. The word "peak" is used to signify a part of the cam surface protruding towards the pistons from that mean cam surface and "trough" is used to signify a part of the cam surface protruding away from the mean cam surface.

Accordingly a first aspect of the present invention provides a hydraulic stepper motor comprising three hydraulic ports each coupled to a piston that is actuatable between pressurised and depressurised configurations; and a contoured cam surface having at least one peak and trough and arranged to react against the pistons, the cam surface coupled to an output shaft; whereby actuation of one of the pistons steps the motor by moving the cam surface until a trough reacts against one or more pressurised pistons thereby stepping the position of the output shaft. This arrangement provides stepped control with a minimal requirement for hydraulic transfer couplings, such as muff couplings, and with greater robustness to failure than prior art arrangements.

The hydraulic stepper motor may be a three-phase hydraulic stepper motor.

The motor may be rotary, the hydraulic ports being equi-angularly spaced. The ports are spaced 120° apart from each other. The rotary motor offers unlimited travel in one direction or the other, as well as the possibility of changing direction in consecutive steps.

Alternatively the motor may be linear. The cam surface can comprise a single elongate track or three elongate tracks, one reacting against each piston.

There may be more than there hydraulic ports arranged in groups. Where the motor is linear, the cam surface may comprise more than three elongate tracks, one reacting against each piston or group of pistons.

The cam surface may have a number of peaks and troughs equal to the number of hydraulic ports in each group.

Actuation may be commanded by an actuation signal. The hydraulic ports and the output shaft may be in one frame of reference and the actuation signal provided from another frame of reference. The frames of reference may move relative to each other. One of the frames of reference may be stationary.

The pistons may be actuated by valves, the valve being biased to pressurise the pistons. At least one of the pistons may be actuated to its pressurised and depressurised configurations to provide micro-stepping capability.

Another aspect of the present invention provides a pitch control arrangement for a set of rotor blades comprising a hydraulic stepper motor according to the first aspect. Yet another aspect provides a contra-rotating propeller gas turbine engine comprising a pitch control arrangement according to the previous aspect.

The present invention will be more fully described by way of example with reference to the accompanying drawings, in which:
Figure 1 is a sectional side view of a gas turbine engine having contra-rotating propeller stages.
Figure 2 is an axial and a top schematic view of a first embodiment of the hydraulic stepper motor of the present invention.
Figure 3 and Figure 4 are schematic side views of the first embodiment of the hydraulic stepper motor in 3-state configurations.
Figure 5 is a schematic side view of a second embodiment of the hydraulic stepper motor.
Figure 6 is a schematic end view of a third embodiment of the hydraulic stepper motor.
Figure 7 is a perspective graphical illustration of track profiles for the third embodiment of the hydraulic stepper motor.

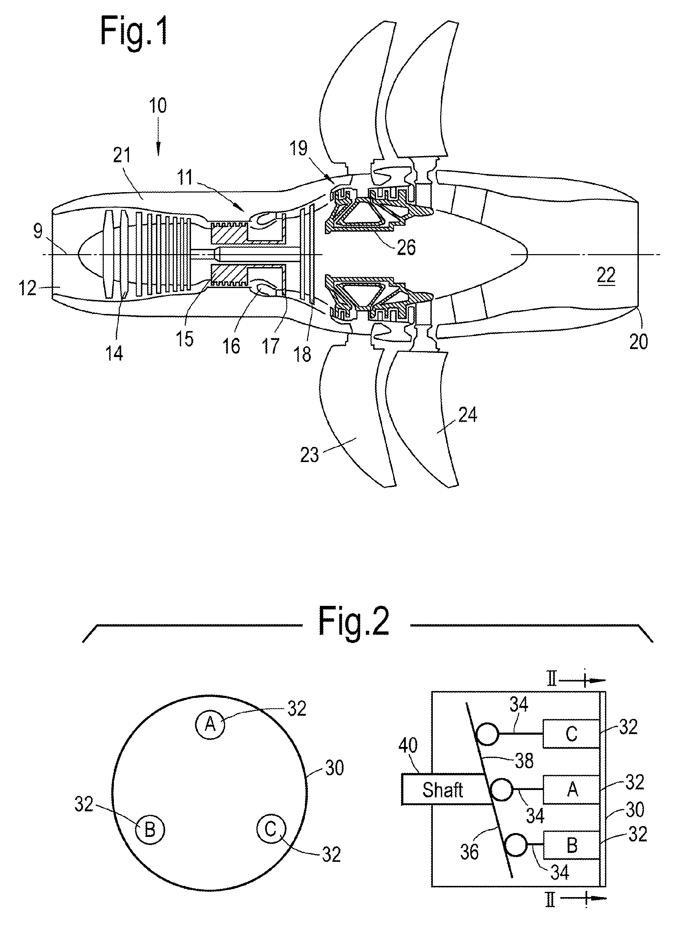

Referring to Figure 1, a twin-spooled, contra-rotating propeller gas turbine engine is generally indicated at 10 and has a principal rotational axis 9. The engine 10 is in a pusher configuration and comprises a core engine 11 having, in axial flow series, an air intake 12, an intermediate pressure compressor 14, a high-pressure compressor 15, combustion equipment 16, a high-pressure turbine 17, an intermediate pressure turbine 18, a free power (or low-pressure) turbine 19 and a core exhaust nozzle 20. A nacelle 21 generally surrounds the core engine 11 and defines the intake 12 and nozzle 20 and a core exhaust duct 22. The engine 10 also comprises two contra-rotating propeller stages 23, 24 attached to and driven by the free power turbine 19 via shaft 26.

The gas turbine engine 10 works in a conventional manner so that air entering the intake 12 is accelerated and compressed by the intermediate pressure compressor 14 and directed into the high-pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high-pressure, intermediate pressure and free power turbines 17, 18, 19 before being exhausted through the nozzle 20 to provide some propulsive thrust. The high-pressure, intermediate pressure and free power turbines 17, 18, 19 respectively drive the high and intermediate pressure compressors 15, 14 and the propellers 23, 24 by suitable interconnecting shafts. The propellers 23, 24 normally provide the majority of the propulsive thrust. In the embodiments herein described the propellers 23, 24 rotate in opposite senses so that one rotates clockwise and the other anti-clockwise around the engine's rotational axis 9.

An exemplary first embodiment of the hydraulic stepper motor of the present invention is shown in Figure 2, the left hand diagram being a view on II as indicated in the right hand diagram. The hydraulic stepper motor 28 comprises a casing 30 that has a circular base in this rotary embodiment. As illustrated, the casing 30 encloses the hydraulic stepper motor 28. Equi-angularly spaced about the casing 30, 120° apart, and extending therethrough are three hydraulic ports 32A, 32B, 32C. The ports 32 are coupled to hydraulic lines (not shown) through muff couplings, or other hydraulics transfer couplings, at the casing 30. Each port 32 is coupled to a piston 34 that is actuated independently of the other pistons 34, by a valve (not shown) such that the piston 34 can be pressurised by allowing hydraulic fluid into it and depressurised by allowing the fluid to drain away. This is not a binary action so that each piston 34 can also be partially pressurised. The distal end of each piston 34 abuts a cam 36 that has a contoured surface 38 and is substantially circular when viewed axially. The cam 36 is coupled to an output shaft 40 that extends through the casing 30 to drive an output device. Where the motor 28 is used to control the pitch of a set of rotor blades of a propeller stage 23, 24 of a contra-rotating gas turbine engine 10 the output device is the pitch change mechanism. Stepped rotation of the cam 36, as will be described hereafter, rotates the output shaft 40 in synchronicity and thereby alters the driven output device by known steps.

The motor 28 and the output device can be located in a first, rotating frame of reference whilst its associated control is located in a second, static frame of reference. Thus, the control can be mounted to the core engine 11 or the nacelle 21 whilst commanding the pitch change mechanism for the rotor blades of the front or rear propeller stages 23, 24. This is advantageous in that it simplifies the control arrangements since the components need not rotate with the propeller stages 23, 24. Since only three hydraulic lines are required, as opposed to the four lines used in the prior art arrangements, there is less leakage of hydraulic fluid across the muff couplings and consequently the fluid pump may have reduced size as it will experience a smaller load. Similarly, since there are only three hydraulic lines only three valves are required to effect control, as opposed to the four required in the prior art, thereby reducing original equipment and maintenance costs and weight. This reduction in components also reduces the overall system failure rate.

The cam surface 38 is shaped such that there is a peak and a trough wherein a peak is defined as a part of the cam surface 38 that is closest to the ports 32 and a trough is a part of the cam surface 38 that is furthest from the ports 32. In the exemplary embodiment having three ports 32A, 32B, 32C each independently controlled by a valve the cam surface 38 has one peak, approximately adjacent to port 32B in Figure 2, and one trough, approximately adjacent to port 32C in Figure 2, so that the cam surface 38 is planar and arranged at an angle to the plane through the piston shafts. In its simplest form the cam 36 is itself relatively thin, planar and angled but in the alternative the cam 36 may be wedge shaped so that the surface coupled to the output shaft 40 is parallel to the plane of the piston shafts whilst the cam surface 38 that reacts against the pistons 34 is angled thereto.

There are six configurations of the pistons 34 in the form shown in Figure 2, which is known as '2-state' by analogy with an electrical three-phase static inverter. In a 2-state configuration, one of the pistons 34 is nearly fully pressurised and hence extended, one is nearly fully depressurised and hence retracted, and one is partially pressurised and hence partially extended. As illustrated, piston 34C is nearly fully pressurised, piston 34B is nearly fully depressurised and piston 32A is partially pressurised. As the pistons are pressurised or depressurised to reach this 2-state configuration, the cam 36 is forced to rotate until a point 30° from the trough of the cam surface 38 reacts against the fully pressurised piston 34C and a point 30° from the peak of the cam surface 38 reacts against the fully depressurised piston 34B. The partially pressurised piston 34A reacts against the mid-height part of the cam surface 38. Since the hydraulic ports 32 and associated pistons 34 are equi-angularly spaced, the 2-state configurations are achieved at equal angles of rotation of the cam 36. As there are six 2-state configurations with three pistons 34 they occur at 60° intervals.

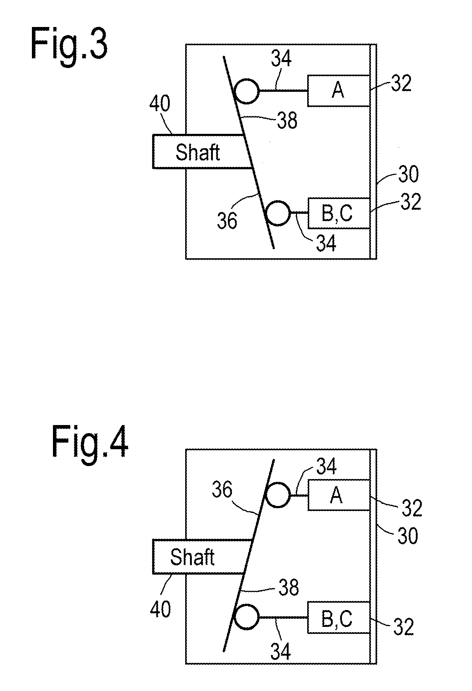

Figure 3 shows a first version of a 3-state configuration of the motor 28 in which one piston, 34A as illustrated, is fully pressurised and two pistons, 34B, 34C, are fully depressurised. Figure 4 shows a second version of a 3-state configuration of the motor 28 in which two pistons, 34B, 34C, are fully pressurised whilst the other piston, 34A, is fully depressurised. In a 3-state configuration no pistons 34 are partially pressurised. The first and second versions occur alternately moving the cam 36 in 60° steps. In a 3-state configuration the cam surface 38 is aligned such that the trough reacts against the one or two fully pressurised pistons 34 and the peak reacts against the one or two fully depressurised pistons 34. Thus, in the first version shown in Figure 3 the trough reacts against the piston 34A whilst the peak reacts against both other pistons 34B, 34C with the closest part of the cam surface 38 located halfway between the pistons 34B, 34C, 60° from each.

The hydraulic stepper motor 28 is more stable in a 3-state configuration with two pistons 34 pressurised than in a 2-state configuration since it is simple to hold the output shaft 40 in position without any pistons 34 being partially pressurised and the motor 28 is more robust against leaks in the hydraulic system. Thus the motor 28 is held at 3-state configurations and passes through 2-state configurations during steps. In order to step the output shaft 40 in steps of 60° the pistons 34 are actuated in the order shown in the table below, where 0 signifies a depressurised piston 34 and 1 signifies a pressurised piston 34. It is immaterial to the invention where 0° is defined and whether the pistons are activated to move the cam 36 clockwise or anticlockwise. Indeed the cam 36 may be rotated by a number of steps in one direction and then be reversed by one or more steps in the opposite direction. This will usually be the case where the motor 28 controls the pitch of the rotor blades of a propeller stage 23, 24 of a gas turbine engine 10. The cam 36 may also be rotated by more than 360° in one direction. In other applications the motor 28 may only be required to step the output shaft 40 in one direction.

| | |
|---|---|
| 001 | 0 degrees / 360 degrees |
| 011 | 60 degrees |
| 010 | 120 degrees |
| 110 | 180 degrees |
| 100 | 240 degrees |
| 101 | 300 degrees |

In order to provide sufficient torque to the output shaft 40 both dynamically and in stationary configurations, the motor 28 may be geared down. This may be achieved by halving the angle of rotation for each step by providing six pistons 34 connected to six ports 32. The ports 32 are grouped so that every third port 32 is supplied from the same hydraulic valve. Where there are six pistons 34 this means two ports 32 are supplied and controlled by each valve. In order for this alternative arrangement to function the cam surface 38 is modified to have the same number of peaks and troughs as there are ports 32 in a group. Thus with six ports 32 in three groups the cam surface 38 is saddle shaped having two peaks diametrically opposed to each other, and two troughs diametrically opposed to each other and intermediate the peaks. This arrangement results in rotational steps of 30° for each activation of a piston group. Alternatively there may be six pistons 34 supplying three ports 32, the pistons being grouped internally of the casing 30.

The principle can be extended to reduce the step size further by providing a multiple of three pistons 34 arranged in three groups with a cam surface 38 modified to have the same number of peaks and troughs, alternating around the arc of the cam 36, as there are pistons 34 in each group.

Each port 32 may be individually supplied and controlled by a valve, with the valves controlled in three groups if preferred. This arrangement provides greater component redundancy but means that control signals may become corrupted and activate only some of the valves, and therefore the pistons 34, in a group.

The hydraulic stepper motor 28 of the present invention has reduced consequences of certain single failures in comparison to the prior art single hydraulic cylinder. When the motor 28 is in a 3-state configuration having two ports 32 pressurised and one port 32 depressurised, a single failure that depressurises one of the pressurised ports 32 causes the motor 28 to step to the next 3-state configuration, moving the output shaft 40 by only 60°. This is also the consequence if the motor 28 is in a 3-state configuration having one port 32 pressurised and a second port 32 is inadvertently pressurised. This is advantageous compared to the prior art in which depressurisation of a pressurised port, or pressurisation of a depressurised port, results in the system travelling fully in one direction, which may have unacceptable repercussions in some safety critical applications. For example, where the pitch of a set of rotor blades of a gas turbine engine 10 is controlled, the blades could be driven to slew fully to fine or coarse pitch resulting in a potential rotor overspeed or a potentially catastrophic increase in drag from the rotor, or in a significant increase in resistance to rotation.

If the motor 28 experiences a depressurisation of a pressurised port 32 in a 3-state configuration having only one pressurised port 32 it will fail with the same effect as the prior art single hydraulic cylinder. In order to minimise this possibility, the motor 28 of the present invention can be arranged so that 3-state configurations having two ports 32 pressurised are favoured for long-term static operation.

The same consequence will pertain to the motor 28 if two ports 32 are pressurised and the third is inadvertently pressurised. However, inadvertent pressurisation occurs less frequently than inadvertent depressurisation.

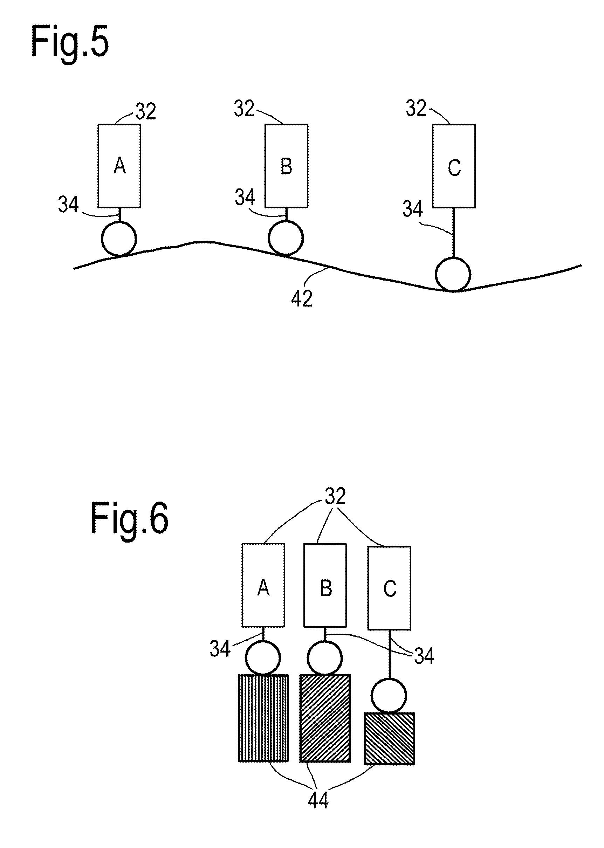

A second embodiment of the hydraulic stepper motor 28 of the present invention is shown in Figure 5 in which like components are given like reference numerals. This embodiment is a linear stepper motor 28 having a single cam track 42 that is moved transversely by activation of the pistons 34 and has an undulated shape exhibiting peaks and troughs. Preferably the cam track 42 extends considerably beyond the pistons 34 so that the motor 28 can make a plurality of steps in one direction before it is necessary to reverse the direction of travel. The motor 28 is illustrated in a 3-state configuration having one piston 34C fully pressurised and two pistons 34A, 34B fully depressurised.

The cam track 42 is coupled to an output device (not shown) as required by its particular application. For example, the output device may be coupled to the cam track 42 via a member in fixed relation to the cam track 42 so that it translates with the cam track 42. Alternatively the output device may be coupled by a member that is fixed laterally and is caused to displace vertically by the passage of the peaks and troughs of the cam track 42.

In a preferred arrangement of the second embodiment the cam track 42 has an undulation period equal to three times the distance between adjacent ports 32 or their associated pistons 34 to maintain the phase relationship. Lower gearing can be achieved by moving the ports 32 and pistons 34 closer together and reducing the period of the undulations in the cam track 42, whilst maintaining the undulation period equal to three times the distance between adjacent ports 32 or pistons 34.

A third embodiment of the hydraulic stepper motor 28 of the present invention is shown in Figure 6, which is a variable speed linear stepper motor 28. Instead of the single cam track 42 of the second embodiment, the third embodiment provides a cam track 44 for each piston 34 to react against. This enables each cam track 44 to have a variable frequency of undulation so that the linear distance travelled in each step can be different to that travelled in other steps. Short undulations maximise the torque available whereas longer undulations provide greater speed. Thus it is beneficial in some applications to have short undulations at the ends of the cam tracks 44 and longer undulations in the middle so that travel is decelerated towards end stops, thereby reducing shock in the system if full travel is predominantly used. Alternatively it may be beneficial to provide a longer undulation just prior to an end stop so that the force acting against the end stop is reduced.

It is necessary that the sum of the heights of the three cam tracks 44 is constant, which may be achieved by arranging the peaks in each of the cam tracks 44 to be 120° out of phase with each other, and the troughs similarly arranged. This is achieved by ensuring the undulation period is three times the spacing between peaks or troughs. Alternatively, if the system is arranged to accommodate a change in the total hydraulic fluid volume, the sum of the heights of the cam track 44 undulations may be non-constant over the length of the cam tracks 44. Additional pistons 34 and associated cam tracks 44 may be provided, with the phase angle between peaks or troughs of the cam tracks 44 being adjusted accordingly.

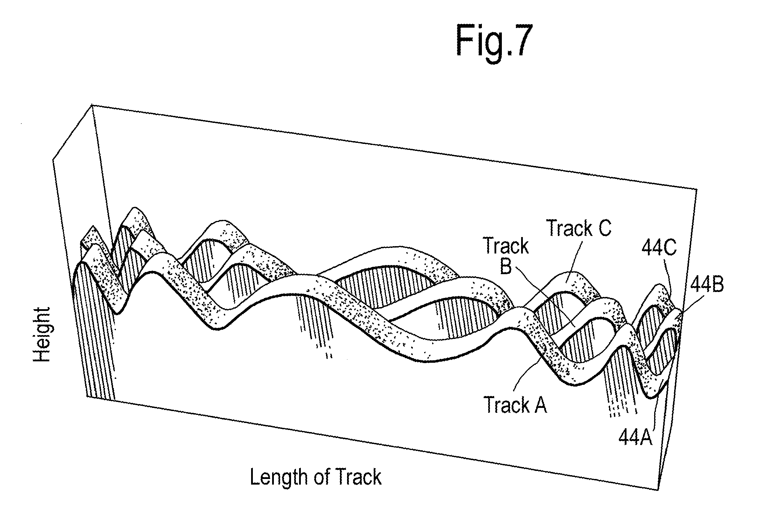

Figure 7 shows an exemplary set of three cam tracks 44A, 44B, 44C in which the sum of the heights of the cam tracks 44 is constant but the period of undulations in each track 44 is non-constant and differs from that in the other tracks 44. Each track 44 has an undulation of longer length in its middle than the undulations towards either end. Five undulations are shown in each cam track 44 but this is exemplary, and is not intended to be limiting to the scope of the invention as claimed herein.

Various modifications and alterations can be made to the embodiments described herein without differing from the spirit and scope of the invention as claimed. The benefits and advantages of the invention can be achieved with equal felicity using such modifications.

For example, the invention may have gearing of the output shaft, by a gear train, pulleys, levers or other means, to change the size of the steps. Multiples of three pistons 34 may be provided and grouped to offer smaller steps. This may also provide beneficial redundancy of components. Although the motor control is efficiently achieved using three phases, more than three phases may be used to achieve different gearing, control or step sizes.

The rotary motor 28 of the first embodiment may incorporate the variable steps of the third embodiment by utilising a more complicated cam surface 38. For example, additional undulations of lesser amplitude could be provided intermediate the main peaks and troughs provided the system is designed to accommodate a change in the total hydraulic fluid volume.

There may be more than one output shaft 40. In particular there may be one output shaft 40 coupled to each cam track 44 in the third embodiment.

Either of the second and third embodiments may be applied in a back to back manner having two parallel cam tracks 42 or sets of cam tracks 44, in or out of phase. Where the cam track 42, 44 profiles are 180° out of phase a double-ended piston 34 may be used.

The pistons 34, ports 32 and cam 36 or cam track 42, 44 are in a first frame of reference whilst the associated control is in a second frame of reference. Each frame of reference may be static or moving, rotating in the first embodiment of the hydraulic stepper motor 28. The first and second frames of reference move relative to each other. In the contra-rotating gas turbine engine 10 application the first frame of reference may be static and also includes the core engine 11 whilst the second frame of reference is rotating and includes the rear rotor stage 24. Alternatively this is reversed. A further alternative has both frames of reference rotating, the first including the front rotor stage 23 and the second including the rear rotor stage 24. The present invention can be applied with equal felicity in a contra-rotating propeller gas turbine engine 10 in a puller configuration.

The present invention is particularly advantageous in high-integrity applications in which it is crucial to prevent or reduce the probability of a failure causing the hydraulic system to travel fully in one or other direction.

Although the invention has been described with respect to controlling the pitch of the rotor blades of a propeller stage 23, 24 of a gas turbine engine 10 it may be used with equal felicity in other applications in other fields. For example, it may be used for stepped hydraulic control between the static chassis and rotating turret of a crane, excavator or tank.

The skilled reader will understand that where sufficient steps are provided the mechanical resolution of the motor 28 will be exceeded. This has the effect of providing apparently smooth drive operation of the motor 28 whilst retaining the precise control inherent in stepped operation.

In any of the embodiments and variations herein described, the motor 28 may be used with variable valves to produce variable pressure at each of the ports 32. This achieves micro-stepping, analogous to micro-stepping operation of an electric stepper motor. It has the advantage of greater positional accuracy. The valves may be arranged to pressurise differently depending on the direction of operation of the hydraulic stepper motor 28, clockwise or anticlockwise in the rotary, first embodiment.

The hydraulic stepper motor 28 may be provided in combination with another means of propulsion, for continuous movement say, in which case the motor 28 may be fully depressurised when the other means of propulsion is activated and vice versa.

The motor 28 may be used to control a plurality of valves or switches by virtue of a gear train, series of levers or cams, or any other mechanical arrangement. In some applications open loop control will therefore be sufficient since the further valves and switches are dependent on known steps of the hydraulic stepper motor 28.

The hydraulic stepper motor 28 of the present invention may be used in a variety of applications in diverse industrial fields including, but not limited to, precision welding, pressing, cutting, pick and place operations, robotics and printing, as well as other manufacturing processes.

The rotary, first embodiment, of the hydraulic stepper motor 28 of the present invention may be used to control the speed of a vehicle or conveyor system having hydraulic drive, for example a passenger or industrial vehicle, a cable car, platform or train. Each of these using any suitable means of actuation such as wheels, tracks or legs. For example, a train that unloads coal or ballast requires controlled low speeds and a bus, cable car, tram or fairground ride may require stepped operation for passenger embarkation and disembarkation.

## Claims

1. A hydraulic stepper motor (28) comprising
three hydraulic ports (32) each coupled to a piston (34) that is actuatable
between pressurised and depressurised configurations; and
a contoured cam surface (38) having at least one peak and trough and
arranged to react against the pistons (34), the cam surface (38) coupled to an output shaft (40);
whereby actuation of one of the pistons (34) steps the motor (28) by moving the cam surface (38) until a trough reacts against one or more pressurised pistons (34) thereby stepping the position of the output shaft (40).

2. A hydraulic stepper motor (28) as claimed in claim 1 wherein the motor (28) is rotary, the hydraulic ports (32) being equi-angularly spaced.

3. A hydraulic stepper motor (28) as claimed in claim 1 wherein the motor (28) is linear, the cam surface (38) comprising a single elongate track (42).

4. A hydraulic stepper motor (28) as claimed in claim 1 wherein the motor (28) is linear, the cam surface (38) comprising three elongate tracks (42), one reacting against each piston (34).

5. A hydraulic stepper motor (28) as claimed in any preceding claim wherein there are more than three hydraulic ports (32) arranged in groups.

6. A hydraulic stepper motor (28) as claimed in claim 5 wherein the motor (28) is linear, the cam surface (38) comprising more than three elongate tracks (42), one reacting against each piston (34) or group of pistons (34).

7. A hydraulic stepper motor (28) as claimed in claim 5 wherein the cam surface (38) has a number of peaks and troughs equal to the number of hydraulic ports (32) in each group.

8. A hydraulic stepper motor (28) as claimed in any preceding claim wherein actuation is commanded by an actuation signal.

9. A hydraulic stepper motor (28) as claimed in claim 8 wherein the hydraulic ports (32) and the output shaft (40) are in one frame of reference and the actuation signal is provided from another frame of reference.

10. A hydraulic stepper motor (28) as claimed in claim 9 wherein the frames of reference move relative to each other.

11. A hydraulic stepper motor (28) as claimed in claim 9 or 10 wherein one of the frames of reference is stationary.

12. A hydraulic stepper motor (28) as claimed in any preceding claim wherein the pistons (34) are actuated by valves, the valves being biased to pressurise the pistons (34).

13. A hydraulic stepper motor (28) as claimed in any preceding claim wherein at least one of the pistons (34) is actuated to its pressurised and depressurised configurations to provide micro-stepping capability.

14. A pitch control arrangement for a set of rotor blades comprising a hydraulic stepper motor (28) as claimed in any preceding claim.

15. A contra-rotating propeller gas turbine engine (10) comprising a pitch control arrangement as claimed in claim 14.
